# EUROPÄISCHE PATENTSCHRIFT

(11) **EP 1 254 973 B1**
(45) Veröffentlichungstag und Bekanntmachung des Hinweises auf die Patenterteilung: **18.06.2008**
(21) Anmeldenummer: 02005590.1
(22) Anmeldetag: 12.03.2002
(51) Int. Cl.: C25D 5/22, C25D 5/48, C25D 3/64

(54) **Verfahren zur Beschichtung von Werkstücken mit einem Lagermetall**
Method of coating of workpieces with a bearing metal
Méthode de recouvrement de pièces de travail avec un métal antifriction

(30) Priorität: 03.05.2001 DE 10121593
(43) Veröffentlichungstag der Anmeldung: 06.11.2002
(73) Patentinhaber: Duralloy AG, 4624 Härkingen (CH)
(72) Erfinder:
(74) Vertreter: Brommer, Hans Joachim

(56) Entgegenhaltungen:
- DE-A- 2 502 284
- DE-A- 19 929 090
- US-A- 3 915 667
- US-A- 5 632 880

## Beschreibung

Die Erfindung geht aus von einem Verfahren zur Beschichtung von metallischen Werkstücken mit einem Lagermetall, wobei das Werkstück zunächst gereinigt und gegebenenfalls aktiviert wird und sodann einem galvanischen Verchromungsbad ausgesetzt wird zur Bildung eines Hartchrom-Überzuges einer Härte von zumindest 600 HV mit perl- oder säulenstrukturartiger Oberfläche, insbesondere gemäß deutschem Patent 25 02 284.

In der genannten Patentschrift wird ein Verchromungsbad beschrieben, mit dem sich glänzende bis metallgraue Chromüberzüge mit perl- oder säulenstrukturartiger Oberfläche einer Härte bis etwa 1500 HV erzielen lassen. Diese Chromüberzüge mit dem Handelsnamen "Duralloy" zeichnen sich zum einen durch hohe Verschleißfestigkeit, zum anderen durch günstige Gleiteigenschaften aus, da die homogene kugelartige Oberflächenstruktur die Benetzbarkeit und damit die Ausbildung eines stabilen Ölfilms begünstigt.

Durch die EP-A 761 844 ist es bekannt geworden, die perl- oder säulenstrukturartige Oberfläche des Hartchrom-Überzuges durch galvanisch aufgebrachtes Schwarzchrom aufzufüllen und zu glätten. Das Schwarzchrom wird im praktischen Betrieb in einer Art Einlaufvorgang innerhalb kurzer Zeit verdichtet und in die Perlstruktur eingebettet. Man erhält dadurch eine Mischstruktur, die auch ohne Schmierstoffe hohe Verschleißfestigkeit bei niedrigen Reibwerten aufweist.

Hiervon ausgehend liegt nun der vorliegenden Erfindung die Aufgabe zugrunde, eine alternative Beschichtung des Hartchrom-Überzuges anzugeben, die sich unter Beibehaltung günstiger Gleiteigenschaften bei hohen Laufzeiten durch besondere Korrosionsbeständigkeit auszeichnet und somit speziell für den Einsatz in der chemischen Industrie geeignet ist.

Diese Aufgabe wird erfindungsgemäß dadurch gelöst, dass die galvanisch aufgebrachte Schicht zumindest überwiegend aus Silber besteht.

Es hat sich überraschend gezeigt, dass Silber, das eigentlich kein Lagermetall ist, in Verbindung mit der perl- oder säulenstrukturartigen Hartchrom-Unterschicht einerseits sehr gute Gleiteigenschaften, insbesondere Notlaufeigenschaftenaufweist. Andererseits bildet es, wohl aufgrund seines Edelmetallcharakters quasi eine Sperrschicht für die Hartchrom-Unterschicht und schützt letztere vor Korrosion, und zwar auch gegenüber chemisch aggressiven Medien.. Unerwarteterweise gilt dieser Korrosionsschutz auch für die Hartchrom-Inseln, die nach dem Einlaufvorgang aus der Silberbeschichtung auftauchen, so dass die erfindungsgemäße Beschichtung auch für chemisch aggressive Anwendungen bestens geeignet ist. Diesbezügliche Untersuchungen der Anmelderin legen den Schluss nahe, dass die Silberschicht beim Einlaufvorgang Additive aus dem Schmierstoff aufnimmt und dadurch eine Mischstruktur bildet, die auch nach dem teilweisen Abtragen der Silberschicht und dem Freiwerden von Hartchrominseln einen Korrosionsschutz für letztere herbeiführt.

Es ist zwar bereits durch die DE 199 29 090 bekannt, auf einer perl- oder säulenstrukturartigen Oberfläche einen Überzug auf Molibdändisulfid-Basis aufzubringen und dadurch die Gleiteigenschaften zu verbessern. Daraus konnte der Fachmann aber keine Anregung entnehmen, die Molibdändislufidschicht durch eine Silberschicht zu ersetzen. Abgesehen davon wird die Molibdändisulfidschicht nicht elektrochemisch aufgebracht, wie es bei der vorliegenden Silberschicht der Fall ist.

Hinsichtlich der abzuscheidenden Silberschicht empfiehlt es sich, dass sie zumindest überwiegend aus nicht oxidiertem Reinmetall besteht. Es liegt aber durchaus im Rahmen der Erfindung, spezielle Silberverbindungen zu wählen oder Silber mit anderen geeigneten Werkstoffen zu kombinieren. Insbesondere kann es zur Herbeiführung niedrigerer Haftreibungskoeffizienten zweckmäßig sein, wenn die Silberschicht einen Graphitanteil, etwa in der Größenordnung von 10 bis 30 %, aufweist. Das Graphit wird dabei in das Galvanisierbad eingebracht und zusammen mit dem Silber auf der Hartchromunterschicht abgeschieden.

Die Dicke der Silberschicht wird vorzugsweise an die späteren Einsatzbedingungen des Werkstückes angepasst. Bei hohen Relativgeschwindigkeiten zwischen den aneinandergleitenden Teilen, insbesondere wenn dabei ein hydrodynamischer Schmierspalt ausgebildet wird, empfiehlt es sich, die Silberschicht in einer Dicke von etwa 0,05 µm bis etwa 3 µm - bezogen auf die Spitzen des perl- oder säulenstrukturartigen Hartchrom-Überzuges - abzuscheiden. Treten hingegen nur geringe Relativgeschwindigkeiten auf, etwa bei hin- und hergehenden Schwenkbewegungen, bei denen sich kein hydrodynamischer Schmierfilm ausbildet, so empfiehlt sich eine Dicke von etwa 3 µm bis 25 µm - auch hier bezogen auf die Spitzen des perl- oder säulenstrukturartigen Hartchrom-Überzuges.

In Weiterbildung der Erfindung empfiehlt es sich, die Silberschicht nicht unmittelbar auf die Hartchrom-Oberfläche aufzubringen, sondern dazwischen eine Nickelschicht als Haftvermittler vorzusehen. Diese Nickelschicht kann ebenfalls galvanisch aufgebracht werden; Danach wird das Werkstück gespült und in das Gaivanisierbad für das Aufbringen der Silberschicht getaucht. Die Dicke der Nickelschicht liegt zweckmäßig bei etwa 0,1 µm bis etwa 1 µm.

Die Dicke des Hartchrom-Überzuges bezogen auf die Spitzen der perl- oder säulensttukturartigen Oberfläche wird zweckmäßig mit zumindest etwa 1,5 µm, vorzugsweise etwa 2 µm bis 8 µm gewählt.

Schließlich sei noch auf eine interessante Weiterbildung der Erfindung hingewiesen in der Form, dass auf die Silberschicht eine zusätzliche Schicht aus einem anderen Metall galvanisch abgeschieden wird. Dies kann dann empfehlenswert sein, wenn man eine längere Lebensdauer und/oder einen besseren Korrosionsschutz benötigt. Dann kann auf der Silberschicht nochmals eine Chromschicht abgeschieden werden, insbesondere wieder in Form eines perl- oder säulenstrukturartigen Hartchrom-Überzuges und gegebenenfalls nochmals eine Silberschicht.

Die Erfindung wird nachstehend anhand von Ausführungsbeispielen mit Zeichnungen näher erläutert; dabei zeigt
- Figur 1: einen Querschnitt durch das Werksstück nach dem Aufbringen der Hartchrom- und der Silberschicht
- Figur 2: den gleichen Querschnitt nach dem Einlaufen des Werkstückes und
- Figur 3: einen Querschnitt durch ein Werkstück mit mehreren Hartchrom- und Silberschichten.

Ausgegangen wird von einem metallischen Werkstück 1, das zunächst thermisch mit maximal 70° C und elektrolytisch entfettet und sodann durch eine 5 %-ige Schwefelsäure-Beize vom basischen in den sauren Zustand überführt wird, um es für die anschließende galvanische Behandlung zu aktivieren. Sodann wird das Werkstück in ein Verchromungsbad getaucht, das 400 bis 500 g/l Chromtrioxid, 2 bis 14 g/l Strontiumsulfat, 4 bis 26 g/l Kaliumsilicofluorid, 2 bis 8 g/l Kaliumdichromat und 4 bis 50 g/l technische 2.2-Dichlormalonsäure enthält. Hierzu und hinsichtlich der übrigen Behandlungsparameter sei auf das bereits genannte deutsche Patent 25 02 284 verwiesen.

Das Werkstück 1 erhält dadurch einen Hartchrom-Überzug 2 mit einer Schichtdicke von zumindest 1,5 µm, vorzugsweise etwa 4 bis 6 µm. Die Badparameter werden so eingestellt, dass sich an der Oberfläche der Hartchromschicht eine mehr oder weniger regelmäßige Perlstruktur 2a mit einer Rautiefe von zumindest etwa 1 µm, vorzugsweise etwa 1,5 µm bis etwa 5 µm einstellt.

Nach dieser Behandlung wird das Werkstück gespült, um die Reste des Chrombades zu entfernen und danach in ein zweites galvanisches Bad getaucht, um auf der Perlstruktur eine Silberschicht abzuscheiden. Als Elektrolytflüssigkeit eignen sich insbesondere Scania® der Firma Heraeus. Die Badtemperatur liegt bei Zimmertemperatur, die Stromdichte bei 0,05 - 0,8 A/dm², die Spannung bei 0,3 - 2,7 Volt.

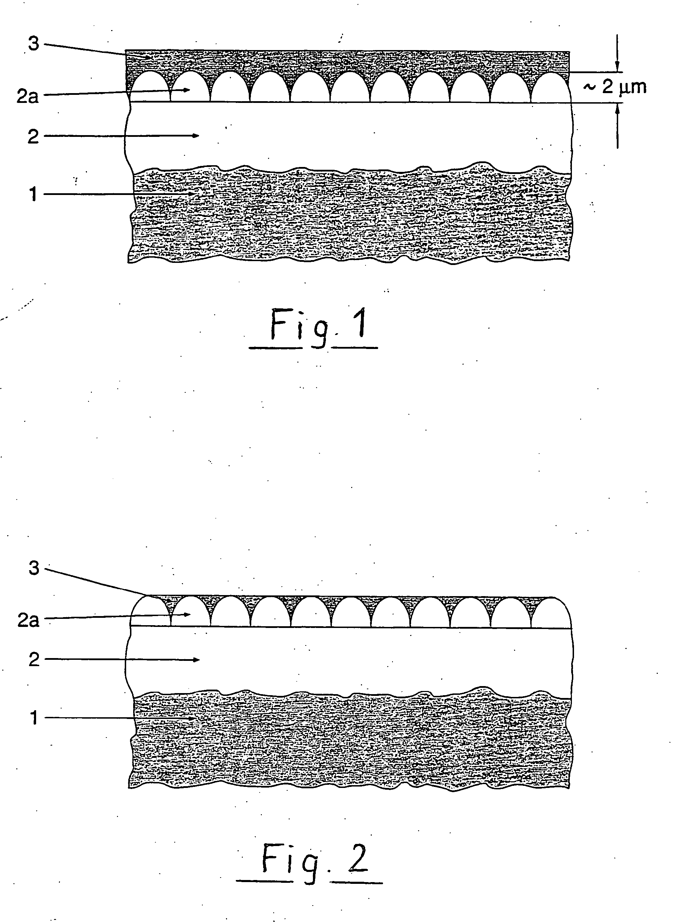

Nach einer Behandlungszeit in der Größenordnung von einigen Minuten bildet sich auf der Hartchromschicht eine Silberschicht von etwa 0,5 µm bis 30 µm. Die Schichtdicke wird so gewählt, dass die Perlstruktur 2a der Hartchromschicht zumindest ausgefüllt und geebnet wird, zweckmäßig auch eine gewisse Überdeckung erhält, wie dies in Figur 1 dargestellt ist. Diese Überdeckung wird aufgrund der geringen Verschleißfestigkeit von Silber nach einer kurzen Einlaufphase abgetragen und in die Perlstruktur verdichtet, worauf sich die in Figur 2 dargestellte Oberflächenstruktur ergibt. Sie ist gekennzeichnet durch eine zusammenhängende Silberphase, die von einer Vielzahl von Hartchrominseln durchsetzt ist. Sie weist keinerlei Poren oder Risse auf.

Um die Haftung der Silberschicht zu verbessern, kann vor dem Aufbringen derselben eine Nickelschicht von etwa 0,1 µm bis 0,5 µm auf der Perlstruktur galvanisch abgeschieden werden.

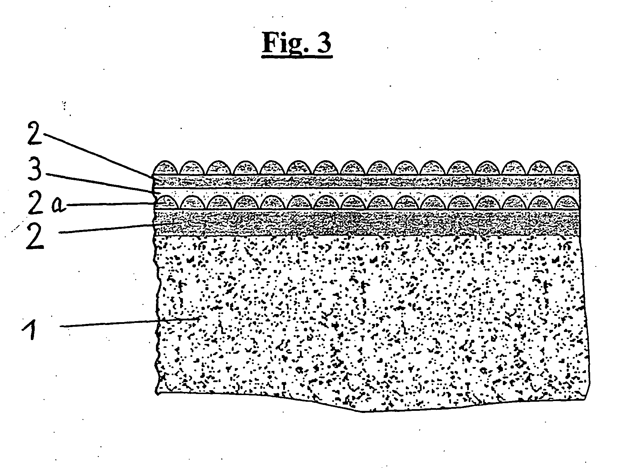

Falls besonders hohe Anforderungen an die Korrosionsbeständigkeit der Beschichtung gestellt werden, kann gemäß Figur 3 eine Multilayer-Beschichtung aus mehreren Hartchrom-Perlstrukturschichten erzeugt werden, wobei es zwar zweckmäßig, aber nicht unbedingt notwendig ist, als äußerste Lage eine Silberschicht zu verwenden. Eine derartige Multilayer-Beschichtung kann mit sehr dünnen Perlstruktur-Hartchromschichten arbeiten, die den Vorteil haben, dass sie absolut rissfrei sind. Ihre mangelnde Korrosionsfestigkeit wird durch die Mehrschichtigkeit kompensiert.

Die erfindungsgemäß beschichteten Werkstücke kommen für alle Lager-Ausbildungen in Betracht, seien es Wälzlager, Gleitlager, Linearführungen, Schlittenlagerungen und dergleichen, aber auch für Triebwerksteile, Verzahnungen und sonstige reibungsbelastete Maschinenelemente.

## Patentansprüche

1. Verfahren zur Beschichtung von metallischen Werkstücken mit einem Lagerwerkstoff, wobei das Werkstück zunächst gereinigt und gegebenenfalls aktiviert wird und sodann einem galvanischen Verchromungsbad ausgesetzt wird zur Bildung eines Hartchrom-Überzuges einer Härte von zumindest 600 HV mit perl- oder säulenstrukturartiger Oberfläche, und wobei die perl- oder säulenstrukturartige Oberfläche durch eine galvanisch aufgebrachte Schicht ausgefüllt und geglättet wird,
**dadurch gekennzeichnet,**
**dass** die galvanisch aufgebrachte Schicht zumindest überwiegend aus Silber besteht.

2. Verfahren nach Anspruch 2,
**dadurch gekennzeichnet,**
**dass** die Silberschicht aus überwiegend nicht oxidiertem Reinmetall besteht.

3. Verfahren nach Anspruch 1,
**dadurch gekennzeichnet,**
**dass** die Silberschicht einen Graphitanteil, insbesondere etwa 10 % bis etwa 30 % Graphit, aufweist.

4. Verfahren nach Anspruch 3,
**dadurch gekennzeichnet,**
**dass** die Silberschicht in einem Graphit enthaltenden Galvanisierbad abgeschieden wird.

5. Verfahren nach Anspruch 1,
**dadurch gekennzeichnet,**
**dass** die Silberschicht für hohe Retativgeschwirdiakerten in einer Dicke von zumindest etwa 0,05 µm - vorzugsweise etwa 0,1 µm bis etwa 3 µm, für niedrige Relativgeschwindigkeiten in einer Dicke von etwa 3 µm bis 25 µm, jeweils bezogen auf die Spitzen des perl- oder säulenstrukturartigen Hartchrom-Überzuges, abgeschieden wird.

6. Verfahren nach Anspruch 1,
**dadurch gekennzeichnet,**
**dass** zwischen der perl- oder säulenstrukturartigen Hartchrom-Oberfläche und der Silberschicht eine Nickelschicht als Haftvermittler aufgebracht wird.

7. Verfahren nach Anspruch 6,
**dadurch gekennzeichnet,**
**dass** die Nickelschicht galvanisch aufgebracht wird.

8. Verfahren nach Anspruch 6,
**dadurch gekennzeichnet,**
**dass** die Nickelschicht eine Dicke von etwa 0,1 µm bis 1 µm hat.

9. Verfahren nach Anspruch 1,
**dadurch gekennzeichnet,**
**dass** der Hartchrom-Überzug bezogen auf die Spitzen der perl- oder säulenstrukturartigen Oberfläche eine Schichtdicke von zumindest etwa 1,5 µm, vorzugsweise von etwa 2 µm bis etwa 8 µm aufweist.

10. Verfahren nach Anspruch 1,
**dadurch gekennzeichnet,**
**dass** auf die Silberschicht eine zusätzliche Schicht, insbesondere eine Metallschicht aufgebracht wird.

11. Verfahren nach Anspruch 10,
**dadurch gekennzeichnet,**
**dass** auf die Silberschicht nochmals eine Chromschicht, insbesondere mit perl- oder säulenstrukturartiger Oberfläche und gegebenenfalls hierauf noch eine überwiegend aus Silber bestehende Schicht abgeschieden wird.

12. Werkstück hergestellt nach dem Verfahren gemäß einem der Ansprüche 1 bis 8.

## Claims

1. Method of coating metal workpieces with a bearing material, wherein the workpiece, optionally is first of all cleaned and optionally activated and is then exposed to a galvanic chromium- plating bath in order to form a hard chromium plating with a hardness of at least 600 HV and a surface with a pearl-like or columnar structure, wherein the surface with a pearl-like or columnar structure is filled with a galvanically applied layer and smoothed, **characterised in that** the galvanically applied layer consists at least predominantly of silver.

2. Method as claimed in Claim 2, **characterised in that** the galvanically applied layer consists predominantly of non-oxidised pure metal.

3. Method as claimed in Claim 1, **characterised in that** the silver layer has a graphite component, in particular approximately 10% to approximately 30% graphite.

4. Method as claimed in Claim 3, **characterised in that** silver layer is deposited in a galvanising bath containing graphite.

5. Method as claimed in Claim 1, **characterised in that** for high relative speeds the silver layer is deposited in a thickness of at least approximately 0.05 µm, preferably approximately 0.1 µm to approximately 3 µm, and for low relative speeds the silver layer is deposited in a thickness of approximately 3 µm to 25 µm, in each case relative to the peaks of the surface with a pearl-like or columnar structure.

6. Method as claimed in Claim 1, **characterised in that** a nickel layer is applied as an adhesion promoter between the pearl-like or columnar hard chromium surface and the silver layer.

7. Method as claimed in Claim 6, **characterised in that** the nickel layer is galvanically applied.

8. Method as claimed in Claim 6, **characterised in that** the nickel layer has a thickness of approximately 0.1 µm to approximately 1 µm.

9. Method as claimed in Claim 1, **characterised in that** the hard chromium coating has a layer thickness of at least approximately 1.5 µm, preferably approximately 2 µm to approximately 8 µm, relative to the peaks of the surface with pearl-like or columnar structure.

10. Method as claimed in Claim 1, **characterised in that** an additional layer, in particular a metal layer, is applied to the silver layer.

11. Method as claimed in Claim 10, **characterised in that** an additional chromium layer, in particular with a surface with a pearl-like or columnar structure, is deposited on the silver layer, and optionally a layer consisting predominantly of silver is deposited on the additional layer.

12. Workpiece produced by the method according to any one of Claims 1 to 8.

## Revendications

1. Procédé de revêtement de pièces d'oeuvre ou à travailler métalliques avec un alliage antifriction, la pièce d'oeuvre étant tout d'abord nettoyée et éventuellement activée et ensuite, soumise à un bain de chromage galvanique pour former un revêtement de chrome dur présentant une dureté d'au moins 600 VH avec des surfaces de type à structure perlée ou en colonne et la surface de type à structure perlée ou en colonne étant remplie et lissée par une couche appliquée par galvanisation,
**caractérisé en ce**
**que** la couche appliquée par galvanisation est constituée au moins principalement ou majoritairement d'argent.

2. Procédé selon la revendication 2,
**caractérisé en ce**
**que** la couche d'argent est constituée principalement ou majoritairement de métal pur non oxydé.

3. Procédé selon la revendication 1,
**caractérisé en ce**
**que** la couche d'argent présente une proportion de graphite, en particulier d'environ 10 % à environ 30 % de graphite.

4. Procédé selon la revendication 3,
**caractérisé en ce**
**que** la couche d'argent est déposée dans un bain de galvanisation contenant du graphite.

5. Procédé selon la revendication 1,
**caractérisé en ce**
**que** la couche d'argent est déposée, pour des vitesses relatives élevées, en une épaisseur d'au moins environ 0,05 µm, de préférence d'environ 0,1 µm à environ 3 µm, pour des vitesses relatives basses, en une épaisseur d'environ 3 µm à environ 25 µm par rapport aux sommets du revêtement de chrome dur de type à structure perlée ou en colonne.

6. Procédé selon la revendication 1,
**caractérisé en ce**
**que** l'on applique une couche de nickel en tant qu'agent adhésif ou de pontage entre la surface de chrome dur de type à structure perlée ou en colonne et la couche d'argent.

7. Procédé selon la revendication 6,
**caractérisé en ce**
**que** la couche de nickel est appliquée par galvanisation.

8. Procédé selon la revendication 6,
**caractérisé en ce**
**que** la couche de nickel présente une épaisseur d'environ 0,1 à 1 µm.

9. Procédé selon la revendication 1,
**caractérisé en ce**
**que** le revêtement de chrome dur présente, par rapport aux sommets de la surface de type à structure perlée ou en colonne, une épaisseur de couche d'environ 1,5 µm, de préférence d'environ 2 µm à environ 8 µm.

10. Procédé selon la revendication 1,
**caractérisé en ce**
**que** l'on applique sur la couche d'argent, une couche supplémentaire, en particulier une couche de métal.

11. Procédé selon la revendication 10,
**caractérisé en ce**
**que**, sur la couche d'argent est déposée encore une fois une couche de chrome, en particulier avec une surface de type à structure perlée ou en colonne et éventuellement sur celle-ci, encore une couche constituée principalement ou majoritairement d'argent.

12. Pièce d'oeuvre fabriquée selon le procédé selon l'une quelconque des revendications 1 à 8.
